# EUROPÄISCHE PATENTANMELDUNG

(11) **EP 3 462 263 A1**
(43) Veröffentlichungstag der Anmeldung: **03.04.2019**
(21) Anmeldenummer: 17194090.1
(22) Anmeldetag: 29.09.2017
(51) Int. Cl.: G05B 23/02, G05B 19/4065

(54) **VERFAHREN UND ANORDNUNG ZUR ÜBERWACHUNG DES ZUSTANDS EINER PRODUKTIONSEINRICHTUNG**

(71) Anmelder: Siemens Aktiengesellschaft, 80333 München (DE)
(72) Erfinder: Menzel, Thomas, 91094 Langensendelbach OT Bräuningshof (DE)

(57) **Zusammenfassung**

Die Erfindung betrifft ein Verfahren zur Überwachung des Zustands einer Produktionseinrichtung (M), insbesondere einer Maschine, eines Motors oder einer anderen elektromechanischen Einheit einer industriellen Automatisierungsanordnung vorgeschlagen, wobei die Produktionseinrichtung (M) zur Durchführung eines industriellen Prozesses oder einer industriellen Produktion mit einer Steuerungseinrichtung (ST) mit daran angekoppelten ersten Sensoren (S11, S12) und Aktoren ausgerüstet ist, und wobei Signale dieser ersten Sensoren (S11, S12) durch die Steuerungseinrichtung zur Erzeugung von Statusinformationen über den industriellen Prozess oder die industrielle Produktion verwendet werden. Dabei wird zur Überwachung des Zustandes eine Zustandsüberwachungseinrichtung (Z) mit weiteren Sensoren (WS) eingesetzt, wobei weitere Signale zu der Zustandsüberwachungseinrichtung übertragen werden, und wobei die ersten Signale und/oder die Statusinformationen und die weiteren Signale zur Generierung einer Zustandsinformation über die Produktionseinrichtung (M) miteinander in Bezug gesetzt werden. Durch die Trennung der Zustandsüberwachung von den Steuerungseinrichtungen, also den Automatisierungsbetrieb, wird eine getrennte und spätere Projektierung der Zustandsüberwachung ermöglicht, wodurch die Komplexität insbesondere der Projektierung einer Automatisierungslösung, also der Steuerungsaufgabe, verringert wird. Wechselwirkungen mit sicherheitskritischen Steuerungsfunktionen sind ausgeschlossen. Algorithmen in der externen Zustandsüberwachungseinrichtung können zudem eine höhere Komplexität haben, als Algorithmen, die im Kontext der Steuerung laufen.

## Beschreibung

Die Erfindung betrifft ein Verfahren zur Überwachung des Zustands einer Produktionseinrichtung gemäß dem Oberbegriff des Patentanspruchs 1, und eine Anordnung zur Überwachung des Zustands einer Produktionseinrichtung gemäß dem Oberbegriff des Patentanspruchs 8.

In industriellen Automatisierungsanordnungen werden regelmäßig Produktionseinrichtungen (Produktionsmittel) für die Durchführung eines Fertigungsprozesses oder Produktionsprozesses oder dergleichen eingesetzt. Die Produktionseinrichtungen umfassen regelmäßig eine industrielle Steuerung (Steuerungseinrichtung), die oft auch als speicherprogrammierbare Steuerung oder kurz PLC (Programmable Logic Controller) bezeichnet wird. Weiter sind Sensoren und Aktoren regelmäßig Bestandteil einer Produktionseinrichtung, wobei diese Sensoren und Aktoren regelmäßig über ein Feldbussystem oder andere Kommunikationsmittel mit den Steuerungseinrichtungen verknüpft sind. Zu den Produktionseinrichtungen gehören weiter auch alle anderen Produktionsmittel, insbesondere Maschinen (z.B. Werkzeugmaschinen), Fördermittel, Kessel, Heizungen, Kompressoren usw.

Die erwähnten Sensoren dienen in erster Linie der Erzeugung von Messwerten oder allgemein Eingangssignalen für die speicherprogrammierbaren Steuerungen, wodurch ein Steuerungsprogramm in die Lage versetzt wird, den Zustand einer Produktion, eines Produktes oder eines chemischen Prozesses zu erfassen und in Reaktion auf diese damit generierten Zustandsinformationen die erwähnten Aktoren entsprechend anzusteuern und weiterhin Daten für Bedien- und Beobachtungsgeräte (sogenannte HMI-Geräte; HMI = Human Machine Interface) bereitzustellen. Bezogen auf die Produktionsmittel werden mit den Sensoren beispielsweise Drehzahlen und Drehmomente von Antrieben, Temperaturen von Produktionsmitteln (z.B. Motoren), mechanische Zustände und dergleichen erfasst.

Vermehrt werden diese Sensoren auch dazu eingesetzt, um Wartungsinformationen zu erzeugen. Beispielsweise können mit den erwähnten Sensoren Fehlfunktionen festgestellt werden (z.B. Überhitzung von Betriebsteilen, Ausfall von Aktoren), was dann als Fehler gemeldet wird und was dazu führt, dass Teile der Produktionseinrichtung außer Betrieb gesetzt werden oder in einen sicheren Zustand überführt werden. Dazu sind in den Steuerungsprogrammen der speicherprogrammierbaren Steuerung (Steuerungseinrichtung) regelmäßig Software-Routinen und andere Anweisungen programmiert, die die Eingangssignale der Sensoren auf unplausible oder unzulässige Zustände hin untersuchen.

Die damit durchgeführte Zustandsanalyse von Produktionsmaschinen und anderen Teilen der Produktionseinrichtungen wird mit dem Ziel eingesetzt, Verschleißzustände zu erkennen und ggf. auch eine vorbeugende Wartung vorzunehmen, um eine Verfügbarkeit zu erhöhen. Weitere Ziele sind die Optimierung einer Produktivität, eine Überwachung und Verbesserung einer Produktqualität und die Senkung von Betriebskosten und dem Aufwand für Ressourcen (z. B. Energie).

Die in den speicherprogrammierbaren Steuerungen mögliche Zustandsüberwachung stößt aus verschiedenen Gründen oft an Grenzen, beispielsweise wegen der beschränkten verfügbaren Rechenzeit in den speicherprogrammierbaren Steuerungen, deren vornehmliche Aufgabe in der Steuerung eines Produktionsprozesses besteht, wegen der beschränkten Anzahl von Sensoren, die vorwiegend nur dort vorhanden sind, wo sie zur Steuerung des regulären Betriebsablaufs unabdingbar sind, und nicht zuletzt wegen der Notwendigkeit, die in den speicherprogrammierbaren Steuerungen vorgesehene Zustandsanalyse bereits zur Projektierung der Automatisierungsanordnung vorzusehen und in den Steuerungsprogrammen einzuarbeiten.

Wegen dieser Einschränkungen haben sich vermehrt externe Systeme zur Zustandsanalyse von Maschinen und Prozessen verbreitet, die Verschleißzustände erkennen sollen und ggf. eine vorbeugende Wartung anstoßen können bzw. die Planung einer solchen vorbeugenden Wartung ermöglichen sollen. Eines dieser Produkte ist exemplarisch das System Siplus CMS der Siemens AG. Mit solchen Zustandsüberwachungseinrichtungen (auch "CMS" genannt - CMS = Condition Monitoring System) ist es möglich, beispielsweise das Schwingungsverhalten von Maschinenteilen zu überwachen, das Umkehrspiel von Kugelrollspindeln auf der Basis von Soll-Ist-Positionen zu überwachen, Drehmomente und Ströme von elektrischen Maschinen zur Detektion von Verschleiß zu überwachen, Bewegungen und deren Veränderungen beispielsweise bei Werkzeugmaschinen zu überwachen etc.

Charakteristisch für die vorstehend beschriebenen Methoden ist, dass die Analyse (Zustandsüberwachung) entweder auf Größen (insbesondere Sensorwerte) in der Steuerung oder den Antrieben beruht, oder alternativ eine externe Sensorik verwendet, die häufig beispielsweise für Temperatur, Schwingung, Beschleunigung, Dehnung oder andere Größen Messwerte ermittelt. Charakteristisch ist zudem, dass die Sensorik regelmäßig als Teil der Automatisierungslösung projektiert werden muss und den Maschinenzustand an bestimmten, im Engineering bereits festgelegten Maschinenelementen erfasst.

Dies hat den Nachteil, dass die Zustandsanalyse und somit die Überwachung der Produktionseinrichtungen regelmäßig nur in demjenigen Umfang vorgenommen werden kann, der bereits zum Zeitpunkt der Projektierung der industriellen Automatisierungsanordnung vorgesehen worden ist. Durch die damit gegebene Verbindung der Zustandsüberwachung mit der Kernaufgabe der Automatisierungsanordnung, nämlich der Automatisierung eines industriellen Prozesses oder einer industriellen Produktion, ergibt sich zudem eine hohe Komplexität und eine geringe Variabilität.

Es ist also eine Aufgabe der vorliegenden Erfindung, die Überwachung des Zustands einer Produktionseinrichtung zu verbessern und zu vereinfachen.

Es ist eine Kernidee der erfindungsgemäßen Lösung dieser Aufgabe, dass die gemeinschaftliche Projektierung und Ausführung der Maschinensteuerung und der Zustandsüberwachung getrennt wird, wobei jedoch bei der dann externen Zustandsüberwachung sowohl die Sensordaten der Maschinensteuerung als auch Zustandsinformationen aus der Steuerungseinrichtung mit den zur Zustandsüberwachung der Produktionsmittel eingesetzten Sensorik in Bezug gesetzt werden und diese korrelierten Daten von der Zustandsüberwachungseinrichtung ausgewertet werden. Die eigene Sensorik der industriellen Steuerung (z.B. SPS) wird dabei ergänzt oder (zumindest in Teilen) ersetzt durch weitere Sensorik, und die bislang von der Steuerungseinrichtung bzw. SPS selbst durchgeführte Zustandsüberwachung wird ersetzt durch eine der Steuerung gleich- oder übergeordnete, separat projektierte, programmierte und ausgeführte Datenverarbeitungseinheit (auch als "Edge Device" bezeichnet), die nun die primäre Zustandsüberwachungseinrichtung ist und die dabei Zugriff auf interne Daten, Zustandsinformationen und Sensorwerte der Steuerungseinrichtung (SPS) hat.

Die Aufgabe wird insbesondere durch ein Verfahren gemäß dem Patentanspruch 1 und durch eine Anordnung gemäß dem Anspruch 8 gelöst.

Dabei wird ein Verfahren zur Überwachung des Zustands einer Produktionseinrichtung, insbesondere einer Maschine, eines Motors oder einer anderen elektromechanischen Einheit einer industriellen Automatisierungsanordnung vorgeschlagen, wobei die Produktionseinrichtung zur Gestaltung eines industriellen Prozesses oder einer industriellen Produktion mit einer Steuerungseinrichtung mit daran angekoppelten ersten Sensoren und Aktoren ausgerüstet ist, und wobei erste Signale dieser ersten Sensoren durch die Steuerungseinrichtung zur Erzeugung von Statusinformationen über den industriellen Prozess oder die industrielle Produktion verwendet werden. Dabei wird zur Überwachung des Zustandes eine Zustandsüberwachungseinrichtung mit weiteren Sensoren eingesetzt, wobei durch die weiteren Sensoren weitere Signale zu der Zustandsüberwachungseinrichtung übertragen werden, und wobei die ersten Signale und/oder die Statusinformationen und die weiteren Signale zur Generierung einer Zustandsinformation über die Produktionseinrichtung zumindest teilweise miteinander in Bezug gesetzt werden. Durch die Trennung der Zustandsüberwachung von den Steuerungseinrichtungen, also den Automatisierungsbetrieb, wird eine getrennte und spätere Projektierung der Zustandsüberwachung ermöglicht, wodurch die Komplexität insbesondere der Projektierung einer Automatisierungslösung, also der Steuerungsaufgabe, verringert wird. Wechselwirkungen mit sicherheitskritischen Steuerungsfunktionen sind ausgeschlossen. Algorithmen in der externen Zustandsüberwachungseinrichtung können zudem eine höhere Komplexität haben, als Algorithmen, die im Kontext der Steuerung laufen.

Die Aufgabe wird ebenso durch eine Anordnung zur Überwachung einer Zustandsüberwachung einer industriellen Automatisierungsanordnung gelöst, wobei die Produktionseinrichtung zur Durchführung eines industriellen Prozesses oder einer industriellen Produktion mit ersten Sensoren und Aktoren ausgerüstet ist, und wobei erste Signale dieser ersten Sensoren zur Erzeugung von Statusinformationen über den industriellen Prozess oder die industrielle Produktion durch die Steuerungseinrichtung vorgesehen sind. Dabei ist weiterhin vorgesehen, dass zur Überwachung des Zustandes der Produktionseinrichtung, insbesondere einer Maschine oder einer elektromechanischen Einheit, eine externe Zustandsüberwachungseinrichtung mit weiteren Sensoren eingesetzt wird, wobei durch die weiteren Sensoren weitere Signale zu der Zustandsüberwachungseinrichtung übertragen werden können, und wobei vorgesehen ist, dass die ersten Signale und/oder die daraus gewonnenen Statusinformationen der Steuerungseinrichtung und die weiteren Signale zur Generierung einer Zustandsinformation über die Produktionseinrichtung zumindest teilweise miteinander in Bezug gesetzt werden. Durch eine solche Anordnung können die bereits im Zusammenhang des erfindungsgemäßen Verfahrens erwähnten Vorteile realisiert werden.

Vorteilhafte Ausgestaltungen des erfindungsgemäßen Verfahrens und der erfindungsgemäßen Anordnung sind in den abhängigen Patentansprüchen angegeben. Die für das Verfahren aufgezählten vorteilhaften Ausgestaltungen gelten sinngemäß auch für die erfindungsgemäße Anordnung, und umgekehrt. Die in den abhängigen Patentansprüchen angegebenen vorteilhaften Ausgestaltungen können sowohl einzeln, als auch in sinnfälliger Kombination miteinander realisiert werden.

Vorteilhaft ist die Zustandsüberwachungseinrichtung an ein industrielles Netzwerk, insbesondere ein Feldbussystem, angebunden und kann mittels dieses Netzwerkes auf die internen Daten und somit auch Sensorwerte der industriellen Steuerungseinrichtung zugreifen. Durch die Nutzung einer solchen ohnehin vorgesehenen industriellen Datenschnittstelle der Steuerung kann der Zugriff weitgehend rückwirkungsfrei erfolgen, beispielsweise nach Art des Zugriffes eines Bedien- und Beobachtungsgerätes, welches ebenfalls auf Variablen, Sensorinformationen und interne Zustandsinformationen der industriellen Steuerung zugreift.

In einer weiteren Ausgestaltung wird vorteilhaft als ein weiterer Sensor ein autarker Sensor mit einem drahtlosen Interface verwendet, der mit der Zustandsüberwachungseinrichtung ein ad-hoc-Netzwerk bildet, wenn oder sobald der weitere Sensor sich in der Funkreichweite eines Funkmoduls der Zustandsüberwachungseinrichtung befindet. Damit ist eine Vielzahl von Vorteilen realisierbar, beispielsweise kann ein besonders teurer Sensor flexibel und mobil in einer größeren industriellen Automatisierungsanordnung für verschiedene Zustands-überwachungen eingesetzt werden. Weiterhin verringert eine solche Konstellation den Verdrahtungsaufwand erheblich, so dass auch mobile Zustandsüberwachungseinrichtungen schnell in einem Automatisierungsnetzwerk eingesetzt und auch wieder abgebaut werden können. Insbesondere ergeben sich diese Vorteile, wenn auch die Zustandsüberwachungseinrichtung zum Zugriff auf die internen Daten der Steuerung mit einem Funkmodul, beispielsweise ein Wlan-Modul, ausgestattet ist.

Vorteilhaft weist der weitere Sensor einen Datenspeicher auf, wobei eine Aufzeichnung und weitere Wiedergabe einer Anzahl von Werten für das jeweilige Signal möglich ist. Dabei wird vorteilhaft durch den weiteren Sensor auch eine Zeitinformation bei der Erfassung eines Wertes für das weitere Signal erfasst, gespeichert und bei der Übertragung des weiteren Signals übermittelt. Dies ist insbesondere dann von Vorteil, wenn die Zustandsüberwachung nicht zur Echtzeit erfolgen soll oder kann, sondern anhand von aufgezeichneten Daten zu einem späteren Zeitpunkt.

Die Zustandsinformation wird vorteilhaft zum Anstoß oder zur Planung einer vorausschauenden Wartung der Produktionseinrichtung verwendet. Zusätzlich können jedoch auch analog zum sogenannten "Alarming" der Steuerungseinrichtung auch durch die externe Zustandsüberwachungseinrichtung zur Laufzeit Alarme erzeugt werden, wenn beispielsweise durch den weiteren Sensor, insbesondere im Zusammenspiel der Signale des weiteren Sensors mit den internen Daten und Zustandsinformationen der Steuerungseinrichtung, eine schwerwiegende Störung festgestellt wird.

In einer vorteilhaften Variante werden auf dem weiteren Sensor Informationen oder Anweisungen über Interpretation oder eine Auswertung zumindest eines Teils der weiteren Daten gespeichert, wobei diese Informationen an die Zustandsüberwachungseinrichtung übertragen und von dieser Zustandsüberwachungseinrichtung zur Bewertung der weiteren Signale verwendet werden. Somit ist es möglich, ohne einen direkten Zugriff auf die Programmierung der Zustandsüberwachungseinrichtung weitere Einstellungen zu tätigen, insbesondere durch die Verwendung eines ausgewählten weiteren Sensors aus einem Vorrat von weiteren Sensoren, die jeweils unterschiedlich vorprogrammiert sind.

Die Zustandsüberwachungseinrichtung ist vorteilhaft als eine separate Hardware-Einheit mit einer eigenen Software zur Zustandsüberwachung ausgeführt. Damit wird eine maximale Flexibilität, eine spätere Erweiterbarkeit bzw. spätere Projektierbarkeit und eine Rückwirkungsfreiheit zur Steuerungseinrichtung erreicht. In einer anderen Variante ist es jedoch möglich, die Zustandsüberwachungseinrichtung als ein separates Funktionsmodul einer Steuerungseinrichtung zu realisieren, sofern auf der Steuerungseinrichtung die erforderliche Rechenkapazität zur Verfügung steht. Bei einer solchen Variante kann beispielsweise bei einem Mehrkern-Prozessorsystem ein Prozessorkern für die Zustandsüberwachung reserviert werden. Eine ähnliche Konstellation kann erreicht werden, wenn Virtualisierungstechnik eingesetzt wird und für die Zustandsüberwachung eine separate virtuelle Maschine eingesetzt wird.

In einer vorteilhaften Ausgestaltung ist der weitere Sensor zu einem autarken Betrieb ausgerüstet, insbesondere durch einen Energiespeicher und/oder durch die Möglichkeit, aus seinem Umfeld Energie zu ernten ("Energy Harvesting"). Insbesondere im Zusammenspiel mit einer Ausführung als Funkmodul wird so eine maximale Flexibilität erreicht.

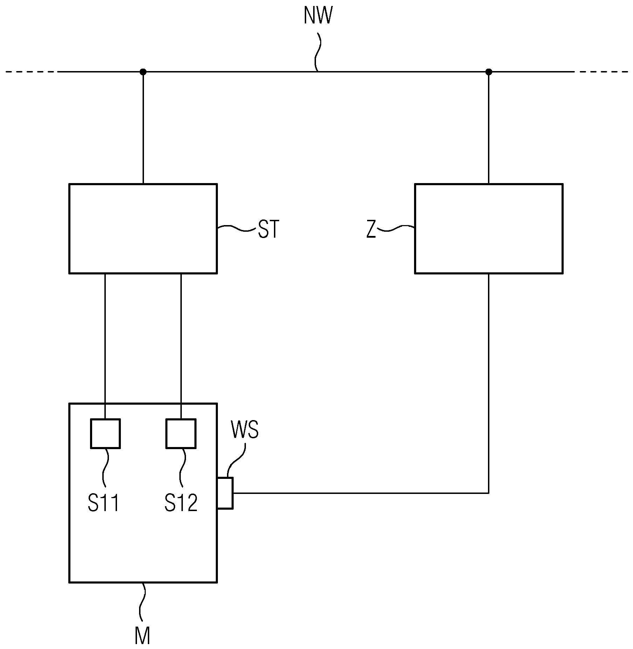

Ein Ausführungsbeispiel des erfindungsgemäßen Verfahrens wird nachfolgend anhand der Zeichnung diskutiert. Dies dient zugleich der Erläuterung einer erfindungsgemäßen Anordnung. Dabei zeigt die einzige Figur in einer schematischen Darstellung eine Produktionseinrichtung mit einer Steuerungseinrichtung, einer zu überwachenden Maschine und einer externen Zustandsüberwachungseinrichtung.

In der Figur ist eine Steuerungseinrichtung (kurz: Steuerung) ST, insbesondere eine speicherprogrammierbare Steuerung (PLC) dargestellt. Die Steuerungseinrichtung ST ist mit Sensoren S11,S12 (erste Sensoren) zur Steuerung einer Maschine ausgerüstet, wobei die Maschine hier ein Beispiel für eine Produktionseinrichtung M (Produktionsmittel) darstellt; die Steuerungseinrichtung ST umfasst selbstverständlich auch Aktoren, die jedoch aus Gründen der Übersichtlichkeit nicht dargestellt worden sind. Eine Zustandsüberwachungseinrichtung Z ist über ein Netzwerk NW, insbesondere ein industrielles Datennetzwerk oder Feldbussystem, mit der Steuerungseinrichtung ST verbunden. Über diese Netzwerkverbindung oder in einer alternativen Variante über eine dedizierte industrielle Datenschnittstelle der Steuerungseinrichtung ST kann die Zustandsüberwachungseinrichtung Z auf interne Daten, Zustandsinformationen und auch auf die Daten der Sensoren S11,S12 zugreifen. Über eine andere Datenverbindung, insbesondere auch über eine Funkverbindung eines ad-hoc-Netzwerkes, ist die Zustandsüberwachungseinrichtung Z mit einem weiteren Sensor WS verbunden, der in oder an der Maschine (Produktionseinrichtung M) angeordnet ist und weitere Signale, beispielsweise Druck, Temperatur, Vibration, Drehzahl etc. der Maschine erfasst und an die Zustandsüberwachungseinrichtung Z meldet.

Wesentlich ist, dass die Zustandsüberwachungseinrichtung Z die weiteren Signale, also die von dem weiteren Sensor WS erfassten Daten, mit Zustandsinformationen und insbesondere den Daten und Werten der Sensoren S11,S12 der Steuerungseinrichtung ST miteinander in Bezug setzt, um daraus eine Zustandsinformation zu generieren. So kann beispielsweise eine Vibration, die von dem weiteren Sensor WS gemessen wird, mit einer Lastinformation der Maschine, die in der Steuerungseinrichtung ST vorliegt, in Bezug gesetzt werden, d.h., das der Vibrationswert in Bezug auf die Belastung der Maschine (beispielsweise Drehmoment und Drehzahl) bewertet wird. Sofern ein Missverhältnis zwischen der erfassten Vibration und der vorliegenden Auslastung der Maschine besteht, kann beispielsweise auf einen sich anbahnenden mechanischen Schaden geschlossen werden und somit eine vorbeugende Wartung (Austausch der Maschine, Wartung der Maschine) angestoßen oder beauftragt werden.

Im Unterschied zu einer Lösung aus dem Stand der Technik, bei der entweder eine Zustandsüberwachung in ein Steuerungsprogramm der industriellen Steuerung ST integriert ist und somit nur die internen Zustandsinformationen der Steuerung ST und somit bezüglich der Sensorik nur die Werte der Sensoren S11,S12 zur Verfügung stehen, oder im Unterschied zu vollständig externen Zustandsüberwachungseinrichtungen, die nur mit rein externer Sensorik an bestehenden Maschinen arbeiten, kommuniziert erfindungsgemäß die Zustandsüberwachungseinrichtung Z mit der Steuerungseinrichtung ST, beispielsweise ein Industrial Ethernet oder auch ein Feldbus-System oder eine andere industrielle Schnittstelle, und hat somit alle Signale und Zustände verfügbar, die von der Steuerung ST oder von mit der Steuerung ST vernetzten Sensorik-Einheiten (Sensoren S11,S12) generiert oder gemessen werden. Vorteilhaft ist die Zustandsüberwachungseinrichtung Z frei programmierbar in einer Hochsprache, so dass auch komplexe Analysealgorithmen implementiert werden können. Hierzu gehören u.a. auch modelbasierte Verfahren oder Methoden der künstlichen Intelligenz (AI). Wesentlich ist, dass die Zustandsüberwachungseinrichtung Z mindestens eine weitere Verbindung oder ein Kommunikationskanal zur weiteren Sensorik WS aufweist, um zusätzliche Messwerte zu empfangen. Die weitere Sensorik WS ist dabei nicht Teil der Projektierung und Ausführung der zugrundeliegenden Automatisierungslösung und wird somit für die eigentliche Steuerungsaufgabe nicht benötigt. Die weitere Sensorik WS nutzt Kommunikationswege und Protokolle, die zu den der Steuerungstechnik verschieden sein können, also beispielsweise ad-hoc-vernetzte, drahtlose Kommunikationen wie Bluetooth anstelle einer Feldbuskommunikation oder dergleichen. Die weitere Sensorik WS kann vorteilhaft eine autarke Energieversorgung aufweisen, beispielsweise Akkumulatoren, Solarzellen oder dergleichen. Typischerweise können die weiteren Sensoren WS aufwandsminimal hinzugefügt werden, d.h. ohne Änderungen der Automatisierungslösung bezüglich derer Hardware-Konfiguration und/oder bezüglich des Steuerungsprogramms. Somit kann die Zustandsüberwachung auch gut in bestehende Anlagen und industrielle Lösungen integriert bzw. nachgerüstet werden.

In einer vorteilhaften Variante ist die Zustandsüberwachungseinrichtung ein sogenannter "Cloud-basierter" Dienst, d.h., dass die Daten des weiteren Sensors WS in ein drahtlos zugreifbares Weitverkehrs-Datennetzwerk eingespeist werden und dass die Auswertung und somit die Erzeugung der Zustandsinformation durch einen irgendwo in der "Cloud" als ein Serverdienst realisierte Einheit durchgeführt wird. Dazu ist auch die Steuerungseinrichtung ST mit einem sogenannten "Cloud-Connector" zu versehen, d.h. das die erforderlichen Daten der industriellen Steuerung ebenfalls in das Weitverkehrs-Datennetzwerk ("Cloud") eingespeist werden. Die gezeigte lokale Zustandsüberwachungseinrichtung Z wird somit zu einem Kommunikationsmittel zwischen der lokalen Hardware, als der Steuerung ST und der weiteren Sensorik WS, und einem "cloudbasierten" Zustandsüberwachungsdienst.

Durch die Verwendung separater weiterer Sensorik WS und dedizierter Datenverbindung zwischen dieser weiteren Sensorik WS und der Zustandsüberwachungseinrichtung Z können auch hochfrequente Signale mit hohen Absatzraten erfasst und mit komplexen Methoden (z.B. solchen der künstlichen Intelligenz - AI oder komplexen mathematischen Funktionen) ausgewertet werden, was bei der typischerweise beschränkten Bandbreite der herkömmlichen industriellen Sensorik (Sensoren S11,S12) oft nicht ohne weiteres möglich ist.

Ein Beispiel für einen Einsatz des erfindungsgemäßen Verfahrens und der erfindungsgemäßen Anordnung ist in der Verpackungsindustrie gegeben.

Eine Abfüllanlage besteht aus Maschineneinheiten z.B. zum Reinigen einer Flasche, das Befüllen, das Versiegeln, das Beschriften, etc. Zwischen den einzelnen Modulen befinden sich Maschinen zum Materialtransport (Förderbänder, Förderschnecken, Handhabungssystem), Lagersysteme, Puffer.

Eine wesentliche Einzelmaschine ist der Füller, bei dem auf einem "Karussell" zeitgleich bis zu mehreren Hundert Flaschen gefüllt werden. Ein hoch belastetes und zugleich unabdingbares Maschinenelement ist die dem Füller unterlagerte Kugeldrehverbindung. Verschleiß an der Kugeldrehverbindung kann zum Maschinenstillstand führen und mithin die gesamte Anlage auch ungeplant stoppen, was mit Produktionsverlusten und Kosten verbunden ist.

Jedoch sind aus der Analyse von Frequenzen und deren Veränderungen (z.B. andere Eigenfrequenzen) Rückschlüsse auf den Verschleißzustand und die Notwendigkeit eines Austausches -im Vorfeld eines Stillstandes - möglich. Hierzu müssen sowohl Daten aus der Steuerung (z.B. Geschwindigkeiten) als auch das Maschinenverhalten erfasst werden, d.h. Schwingungsdaten mit autarker Sensorik. Die Daten der Automatisierungstechnik und die Messwerte der autarken Sensorik werden in der Zustandsüberwachnungseinrichtung Z ("Edge Device") zusammengeführt und können nun mit komplexen Methoden (z.B. Fourier-Transformationen, modellbasiert oder mit Methoden der künstlichen Intelligenz - AI) analysiert werden. Im Ergebnis dessen kann erkannt werden, ob die Kugeldrehverbindung zunehmend verschlissen ist und mithin eine vorbeugende Wartung zu einem geeigneten Zeitpunkt durchzuführen ist.

Ungeplante Ausfälle des Maschinenelements und mithin der Anlage können so weitgehend vermieden werden.

## Patentansprüche

1. Verfahren zur Überwachung des Zustands einer Produktionseinrichtung (M) einer industriellen Automatisierungsanordnung,
wobei die Produktionseinrichtung (M) zur Durchführung eines industriellen Prozesses oder einer industriellen Produktion mit einer Steuerungseinrichtung (ST) mit daran angekoppelten ersten Sensoren (S11,S12)und Aktoren ausgerüstet ist, und wobei erste Signale dieser ersten Sensoren (S11,S12) durch die Steuerungseinrichtung (ST) zur Erzeugung von Statusinformationen über den industriellen Prozess oder die industrielle Produktion verwendet werden,
**dadurch gekennzeichnet,**
**dass** zur Überwachung des Zustandes eine Zustandsüberwachungseinrichtung (Z) mit weiteren Sensoren (WS) eingesetzt wird, dass durch die weiteren Sensoren (WS) weitere Signale zu der Zustandsüberwachungseinrichtung (Z) übertragen werden, und
**dass** die ersten Signale und/oder die Statusinformationen und die weiteren Signale zur Generierung einer Zustandsinformation über die Produktionseinrichtung (M) zumindest teilweise miteinander in Bezug gesetzt verwendet werden.

2. Verfahren nach Patentanspruch 1,
**dadurch gekennzeichnet,**
**dass** die Zustandsüberwachungseinrichtung (Z) auf interne Daten der Steuerungseinrichtung (ST) der Produktionseinrichtung (M), insbesondere auf die Signale der ersten Sensoren (S11,S12) und/oder die Statusinformationen über den industriellen Prozess oder die industrielle Produktion, über ein industrielles Netzwerk (NW) oder eine industrielle Datenschnittstelle der Steuerungseinrichtung (ST) zugreift.

3. Verfahren nach einem der vorherigen Patentansprüche,
**dadurch gekennzeichnet,**
**dass** der weitere Sensor mit der Zustandsüberwachungseinrichtung (Z) ein ad-hoc-Netzwerk (NW) bildet, sobald der weitere Sensor in die Funkreichweite eines Funkmoduls der Zustandsüberwachungseinrichtung (Z) gelangt.

4. Verfahren nach einem der vorherigen Patentansprüche, **dadurch gekennzeichnet,**
**dass** der weitere Sensor einen Datenspeicher aufweist,
wobei eine Aufzeichnung und spätere Wiedergabe einer Anzahl Werte für das jeweilige Signal erfolgt.

5. Verfahren nach einem der vorherigen Patentansprüche,
**dadurch gekennzeichnet,**
**dass** durch den weiteren Sensor eine Zeitinformation bei der Erfassung eines Wertes für das weitere Signal erfasst, gespeichert und bei der Übertragung des weiteren Signals übermittelt wird.

6. Verfahren nach einem der vorherigen Patentansprüche,
**dadurch gekennzeichnet,**
**dass** die Zustandsinformation zum Anstoß oder zur Planung einer Wartung der Produktionseinrichtung (M) verwendet wird.

7. Verfahren nach einem der vorherigen Patentansprüche,
**dadurch gekennzeichnet,**
**dass** auf dem weiteren Sensor Informationen über Interpretation oder Auswertung zumindest eines Teils der weiteren Daten gespeichert sind, wobei diese Informationen an die Zustandsüberwachungseinrichtung (Z) übertragen und von dieser Zustandsüberwachungseinrichtung (Z) zur Bewertung der weiteren Signale verwendet werden.

8. Anordnung nur Überwachung des Zustands einer Produktionseinrichtung (M) einer industriellen Automatisierungsanordnung,
wobei die Produktionseinrichtung (M) zur Durchführung eines industriellen Prozesses oder einer industriellen Produktion mit ersten Sensoren (S11,S12)und Aktoren ausgerüstet ist, und
wobei erste Signale dieser ersten Sensoren (S11,S12) zur Erzeugung von Statusinformationen über den industriellen Prozess oder die industrielle Produktion durch die Steuerungseinrichtung (ST) vorgesehen sind,
**dadurch gekennzeichnet,**
**dass** vorgesehen ist, dass zur Überwachung des Zustandes eine Zustandsüberwachungseinrichtung (Z) mit weiteren Sensoren (WS) eingesetzt wird,
wobei weiter vorgesehen ist, dass durch die weiteren Sensoren (WS) weitere Signale zu der Zustandsüberwachungseinrichtung (Z) übertragen werden, und
wobei vorgesehen ist, dass die ersten Signale und/oder die Statusinformationen und die weiteren Signale zur Generierung einer Zustandsinformation über die Produktionseinrichtung (M) zumindest teilweise miteinander in Bezug gesetzt werden.

9. Anordnung nach Patentanspruch 8,
**dadurch gekennzeichnet,**
**dass** die Zustandsüberwachungseinrichtung (Z) als eine separate Hardware-Einheit mit einer Software zur Zustandsüberwachung ausgeführt ist.

10. Anordnung nach Patentanspruch 8 oder 9,
**dadurch gekennzeichnet,**
**dass** der weitere Sensor zu einem autarken Betrieb ausgerüstet ist, insbesondere durch einen Energiespeicher.

11. Anordnung nach einem der Patentansprüche 8 bis 10,
**dadurch gekennzeichnet,**
**dass** der weitere Sensor zur Bildung eines ad-hoc-Netzwerkes mit einer Funkeinrichtung der Zustandsüberwachungseinrichtung (Z) ausgebildet ist.
